# EUROPEAN PATENT APPLICATION

(11) **EP 3 581 449 A1**
(43) Date of publication of application: **18.12.2019**
(21) Application number: 18767493.2
(22) Date of filing: 16.02.2018
(51) Int. Cl.: B60W 30/09, B60W 30/10, B60W 30/12, B60W 30/165, B60W 30/182, B60W 40/04, B60W 40/06, B60K 31/00, F02D 29/02, G08G 1/16

(54) **DRIVING ASSIST CONTROL DEVICE**

(30) Priority: 17.03.2017 JP 2017052142
(71) Applicant: Mazda Motor Corporation, Aki-gun, Hiroshima 730-8670 (JP)
(72) Inventor: OHMURA, Hiroshi, Aki-gun Hiroshima 730-8670 (JP); IIMURA, Sahori, Aki-gun Hiroshima 730-8670 (JP)
(74) Representative: Müller-Boré & Partner Patentanwälte PartG mbB
(86) International application number: PCT/JP2018/005468
(87) International publication number: WO 2018/168323

(57) **Abstract**

A driving support control device 10 controls a vehicle 1 in accordance with one driving support mode selected by a driver, and configured to, in a preceding vehicle following mode or an automatic speed control mode as a given driving support mode, execute control of causing the vehicle 1 to travel at a target speed, and further configured to detect an obstacle, and set a speed distribution zone 40 defining a distribution zone of an allowable upper limit Vₗᵢₘ of a relative speed of the vehicle 1 with respect to the obstacle, and to execute obstacle avoidance control of preventing the relative speed from exceeding Vₜᵢₘ, wherein the driving support control device 10 is operable, when the target speed is being restricted by the obstacle avoidance control, to prohibit a driving support mode transition.

## Description

### TECHNICAL FIELD

The present invention relates to a driving support control device, and more particularly to a driving support control device capable of providing plural driving support modes.

### BACKGROUND ART

In recent years, a driving support control system has being becoming increasingly equipped in a vehicle to provide a given driving support mode to a driver (see, for example, the following Patent Document 1). A driving support control system described in the Patent Document 1 is configured to, in response to switch manipulation by a driver, cause switching from a manual driving mode (off mode) to an automatic driving mode (driving support mode). This system is configured to permit such a mode transition when a vehicle satisfies a given condition. Examples of the given condition include a condition that no modification is made in the vehicle, and a condition that a current vehicle speed does not exceed a legal speed limit.

### CITATION LIST

### [Patent Document]

Patent Document 1: JP 2016-088334A

### SUMMARY OF INVENTION

### [Technical Problem]

However, a recent driving support control system has become possible to provide plural driving support modes. Thus, there is a problem that it is necessary to set an appropriate switching condition not only for the aforementioned switching from the off mode to the driving support mode but also for switching among the plural driving support modes, in consideration of safety.

Further, as new insight, the present inventors have discovered that a driving mode switching which is safe and free of stressing a driver cannot be ensured without setting a switching condition while taking into account a traveling course to be set in each driving support mode.

The present invention has been made to solve the above problems, and an object thereof is to provide a driving support control device capable of enabling a safe mode transition during switching among plural driving support modes.

### [Solution to Technical Problem]

In order to achieve the above object, the present invention provides a driving support control device capable of controlling a vehicle in accordance with one driving support mode selected from at least one driving support mode by a driver. The driving support control device is configured to, in a given driving support mode, execute control of causing the vehicle to travel at a setup target speed, and further configured to, in the given driving support mode, detect an obstacle on or around a traveling road on and along which the vehicle is traveling, and set a speed distribution zone defining a distribution zone of an allowable upper limit of a relative speed of the vehicle with respect to the obstacle, in a direction at least from the obstacle toward the vehicle, and to, when the vehicle is within the speed distribution zone, execute avoidance control of preventing the relative speed of the vehicle with respect to the obstacle from exceeding the allowable upper limit, wherein the driving support control device is operable, when the target speed is being restricted by the avoidance control so as to prevent the relative speed of the vehicle with respect to the obstacle from exceeding the allowable upper limit, during the execution of the given driving support mode, to prohibit a driving support mode transition.

In the driving support control device of the present invention having the above feature, in a situation where the vehicle is traveling at the target speed maintained in accordance with the given driving support mode, wherein the target speed is being restricted so as to avoid the obstacle, the driving support mode transition is prohibited. If the driving support mode transition is permitted when the target speed is being restricted so as to avoid the obstacle, a contact or collision with the obstacle is likely to occur after the mode transition. Therefore, by prohibiting the driving support mode transition in the above situation, it becomes possible to prevent the occurrence of a contact or collision with the obstacle. On the other hand, in the driving support control device of the present invention, as long as the target speed is not restricted even in the situation where the obstacle is detected, the driving support mode transition is permitted. This makes it possible to ensure the probability of accepting a request for driving support mode switching from the driver, as high as possible.

In a specific embodiment of the present invention, the driving support control device is configured to calculate a target traveling course used in the given driving support mode, and control the vehicle to travel on and along the target traveling course, in the given driving support mode.

In the above specific embodiment, the driving support control device is operable to: temporally repeatedly calculate a first traveling course which is set to maintain traveling within the traveling road, a second traveling course which is set to follow a trajectory of a preceding vehicle, and a third traveling course which is set based on a current traveling behavior of the vehicle on the traveling road; and select the target traveling course from the calculated traveling courses, based on the given driving support mode selected by the driver.

In the above specific embodiment, the driving support control device is operable to execute the avoidance control so as to prevent the relative speed of the vehicle on the target traveling course with respect to the obstacle from exceeding the allowable upper limit.

In a specific embodiment of the present invention, the at least one driving support mode includes: an automatic speed control mode in which control of causing the vehicle to travel at a given setup vehicle speed is executed; a preceding vehicle following mode in which control of causing the vehicle to follow a preceding vehicle is executed; and a speed limiting mode in which a vehicle speed of the vehicle is restricted from exceeding a legal speed limit designated by a speed sign on a road.

### [Effect of Invention]

The driving support control device of the present invention makes it possible to enable a safe mode transition during switching among plural driving support modes.

### BRIEF DESCRIPTION OF DRAWINGS

FIG. 1 is a configuration diagram of a driving support control system according to one embodiment of the present invention.
FIG. 2 is an explanatory diagram of a first traveling course in this embodiment.
FIG. 3 is an explanatory diagram of a second traveling course in this embodiment.
FIG. 4 is an explanatory diagram of a third traveling course in this embodiment.
FIG. 5 is an explanatory diagram showing a relationship between a driving support mode and a target traveling course, in this embodiment.
FIG. 6 is an explanatory diagram of obstacle avoidance control in this embodiment.
FIG. 7 is an explanatory diagram showing a relationship between an allowable upper limit of a pass-by speed and a clearance between an obstacle and a vehicle in the obstacle avoidance control in this embodiment.
FIG. 8 is a processing flow of driving support control in this embodiment.
FIG. 9 is a processing flow of traveling course correction processing in this embodiment.
FIG. 10A is an explanatory diagram of mode transition restriction processing in this embodiment.
FIG. 10B is an explanatory diagram of the mode transition restriction processing in this embodiment.
FIG. 10C is an explanatory diagram of the mode transition restriction processing in this embodiment.
FIG. 11 is a processing flow of the mode transition restriction processing in this embodiment.

### DESCRIPTION OF EMBODIMENTS

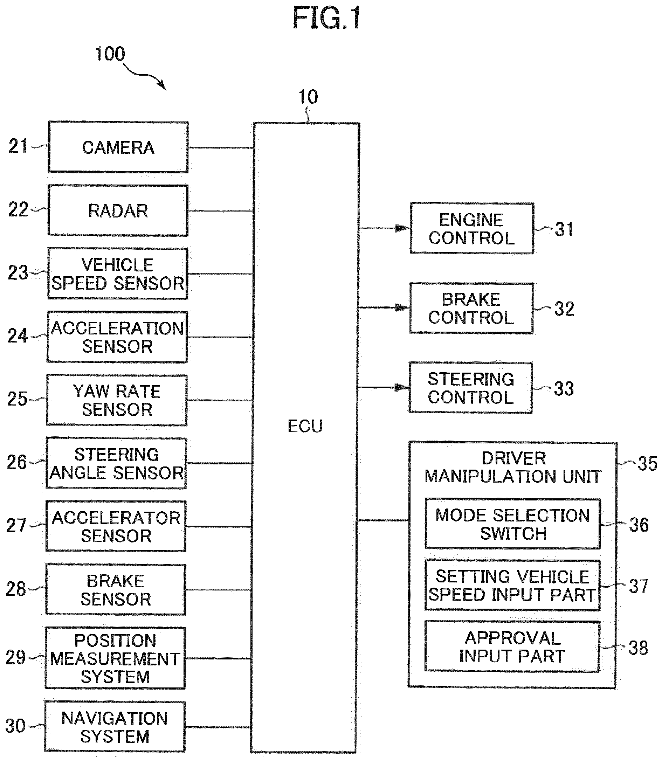

With reference to the accompanying drawings, a driving support control system according to one embodiments of the present invention will now be described. First of all, the configuration of the driving support control system will be described with reference to FIG. 1. FIG. 1 is a configuration diagram of the driving support control system.

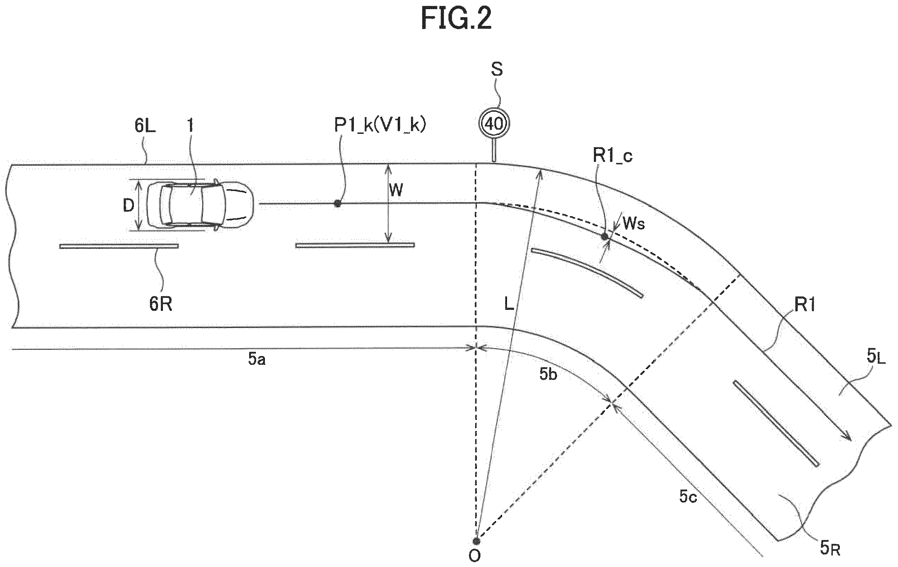

The driving support control system 100 according to this embodiment is configured to provide different drive support controls to a vehicle 1 (see FIG. 2) in accordance with plural driving support modes, respectively. A driver can select a desired one of the plural driving support modes.

As shown in FIG. 1, the driving support control system 100 is equipped in the vehicle 1, and comprises a driving support control device (ECU) 10, plural sensors and switches, plural control sub-systems, and a driver manipulation unit 35 for allowing user input regarding the driving support modes. The plural sensors and switches include: a vehicle-mounted camera 21; a millimeter-wave radar 22; plural behavior sensors (a vehicle speed sensor 23, an acceleration sensor 24, and a yaw rate sensor 25) and plural behavior switches (a steering angle sensor 26, an accelerator sensor 27, and a brake sensor 28), a position measurement system 29, and a navigation system 30. Further, the plural control sub-systems include an engine control system 31, a brake control system 32 and a steering control system 33.

Other examples of the sensors and switches may include a peripheral sonar for measuring the distance and position of a surrounding structural object with respect to the vehicle 1, a corner radar for measuring a proximity of a surrounding structural object with respect to each of four corners of the vehicle 1, and an inner camera for taking an image of the inside of a passenger compartment of the vehicle 1. In this case, the ECU 10 is configured to receive measurement signals/data from these sensors and switches.

The driver manipulation unit 35 is provided in the passenger compartment of the vehicle 1 such that it can be manipulated by the driver, and comprises: a mode selection switch 36 for selecting a desired driving support mode from the plural driving support modes; a setting vehicle speed input part 37 for inputting a setting vehicle speed in accordance with the selected driving support mode; and an approval input part 38 for performing an approval input manipulation regarding a legal speed limit. The driver manipulation unit 35 may further comprise a setting inter-vehicle distance input part for setting an inter-vehicle distance between the vehicle 1 and a preceding vehicle. In response to manipulation of the mode selection switch 36 by the driver, a driving support mode selection signal according to the selected driving support mode is output.

The setting vehicle speed input part 37 comprises a vehicle speed change button, a setup vehicle speed display, and a confirmation button. The driver can manipulate the vehicle speed change button such that a desired setup vehicle speed is displayed on the setup vehicle speed display. Through this manipulation, a setup vehicle speed signal representing the displayed setup vehicle speed is output.

The approval input part 38 comprises a legal speed limit display, and an approval button. The driver can push down the approval button after confirming that a legal speed limit displayed on the legal speed limit display is coincident with a speed designated by a speed sign outside the vehicle 1. Through this manipulation, an approval signal is output.

The ECU 10 is composed of a computer comprising a CPU, a memory storing therein various programs, and an input/output device. The ECU 10 is configured to be operable, based on the driving support mode selection signal, the setting vehicle speed signal and the approval signal each received from the driver manipulation unit 35, and signals received from the plural sensors and switches, to output request signals for appropriately operating an engine system, a brake system and a steering system, respectively, to the engine control system 31, the brake control system 32 and the steering control system 33.

The vehicle-mounted camera 21 is operable to take images around the vehicle 1 and output image data about the taken images. The ECU 10 is operable to identify an object (e.g., a vehicle, a pedestrian, a road, a demarcation line (a lane border line, a white road line or a yellow road line), a traffic light, a traffic sign, a stop line, an intersection, an obstacle or the like) based on the image data. Alternatively or additionally, the ECU 10 may be configured to acquire information regarding such an object from outside via an in-vehicle communication device.

The millimeter-wave radar 22 is a measurement device for measuring the position and speed of the object (particularly, a preceding vehicle, a parked vehicle, a pedestrian, an obstacle or the like), and is operable to transmit a radio wave (transmitted wave) forwardly with respect to the vehicle 1 and receive a reflected wave produced as a result of reflection of the transmitted wave by the object. Then, the millimeter-wave radar 22 is operable, based on the transmitted wave and the received wave, to measure a distance between the vehicle 1 and the object, i.e., a vehicle-object distance, (e.g., inter-vehicle distance) and/or a relative speed of the object with respect to the vehicle 1. In this embodiment, instead of the millimeter-wave radar 22, a laser radar, an ultrasonic sensor or the like may be used to measure the vehicle-object distance and/or the relative speed. Further, the position and speed measurement device may be composed using a plurality of sensors.

The vehicle speed sensor 23 is operable to detect an absolute speed of the vehicle 1.

The accelerator sensor 24 is operable to detect an acceleration (a longitudinal acceleration/deceleration in a longitudinal (forward-rearward) direction, and a lateral acceleration in a lateral (width) direction) of the vehicle 1.

The yaw rate sensor 25 is operable to detect a yaw rate of the vehicle 1.

The steering angle sensor 26 is operable to detect a turning angle (steering angle) of a steering wheel of the vehicle 1.

The accelerator sensor 27 is operable to detect a depression amount of an accelerator pedal.

The brake sensor 28 is operable to detect a depression amount of a brake pedal.

The position measurement system 29 is composed of a GPS system and/or a gyro system, and is operable to detect the position of the vehicle 1 (current vehicle position information).

The navigation system 30 stores therein map information, and is operable to provide the map information to the ECU 10. Then, the ECU 10 is operable, based on the map information and the current vehicle position information, to identify a road, an intersection, a traffic light, a building and others existing around the vehicle 1 (particularly, ahead of the vehicle 1 in the travelling direction). The map information may be stored in the ECU 10.

The engine control system 31 comprises a controller for controlling an engine of the vehicle 1. The ECU 10 is operable, when there is a need to accelerate or decelerate the vehicle 1, to output, to the engine control system 31, an engine output change request signal for requesting to change an engine output.

The brake control system 32 comprises a controller for controlling a braking device of the vehicle 1. The ECU 10 is operable, when there is a need to decelerate the vehicle 1, to output, to the brake control system 32, a braking request signal for requesting to generate a braking force to be applied to the vehicle 1.

The steering control system 33 comprises a controller for controlling a steering device of the vehicle 1. The ECU 10 is operable, when there is a need to change the travelling direction of the vehicle 1, to output, to the steering control system 33, a steering direction change request signal for requesting to change a steering direction.

Next, the driving support modes in the driving support control system 100 according to this embodiment will be described. In this embodiment, the driving support modes consist of four modes (a preceding vehicle following mode, an automatic speed control mode, a speed limiting mode, and a basic control mode).

In speed control to be executed in each of the above driving support modes, a maximum speed and a target speed appropriate to each of the above modes are set. The maximum speed means an upper limit vehicle speed of the vehicle 1 to be permitted in each of the modes. The target speed means a vehicle speed which is setup or calculated to cause the vehicle 1 to travel in each of the modes thereat. Thus, the driving support control system 100 is operable to execute the speed control to cause the vehicle 1 to travel at the target speed to the extent that does not exceed the maximum speed.

Firstly, the preceding vehicle following mode is a mode in which the vehicle 1 is basically controlled to travel following a preceding vehicle, while maintaining a given inter-vehicle distance between the vehicle 1 and the preceding vehicle, and involves automatic steering control, automatic speed control (engine control and/or brake control), automatic obstacle avoidance control (the speed control and the steering control) to be executed by the driving support control system 100.

In the preceding vehicle following mode, the steering control and the speed control are performed in different manners, depending on detectability of opposed lane edges, and the presence or absence of a preceding vehicle. Here, the term "opposed lane edges" means opposed edges (a demarcation line such as a white road line, a road edge, an edge stone, a median strip, a guardrail or the like) of a lane in which the vehicle 1 is traveling, i.e., borderlines with respect to a neighboring lane and sidewalk, or the like. The ECU 10 is operable, when serving as a traveling road edge detection part, to detect the opposed lane edges from the image data about the images taken by the vehicle-mounted camera 21. Alternatively, the ECU 10 may be configured to detect the opposed lane edges from the map information of the navigation system 30. However, for example, in a situation where the vehicle 1 is traveling on the plain on which there is no traffic lane, instead of on a well-maintained road, or in a situation where reading of the image data from the vehicle-mounted camera 21 is bad, there is a possibility of failing to detect the opposed lane edges.

As above, in this embodiment, the ECU 10 is configured to serve as the traveling road edge detection part. Alternatively, the vehicle-mounted camera 21 may be configured to detect the opposed lane edges to serve as the traveling road edge detection part, or may be configured to detect the opposed lane edges in cooperation with the ECU 10 to serve as the traveling road edge detection part.

Further, the ECU 10 is operable, when serving as a preceding vehicle detection part, to detect a preceding vehicle, based on the image data from the vehicle-mounted camera 21, and the measurement data from the millimeter-wave radar 22. Specifically, the ECU 10 is operable to detect a second vehicle which is traveling ahead of the vehicle 1, as a preceding vehicle, based on the image data from the vehicle-mounted camera 21. Further, in this embodiment, the ECU 10 is operable, when the inter-vehicle distance between the vehicle 1 and the second vehicle is determined to be equal to or less than a given value (e.g., 400 to 500 m), based on the measurement data from the millimeter-wave radar 22, to detect the second vehicle as a preceding vehicle.

As above, in this embodiment, the ECU 10 is configured to serve as the preceding vehicle detection part. Alternatively, the vehicle-mounted camera 21 may be configured to detect a second vehicle which is traveling ahead of the vehicle 1 to serve as the preceding vehicle detection part, or the preceding vehicle detection part may be composed of not only the ECU 10 but also the vehicle-mounted camera 21 and the millimeter-wave radar 22.

In the case where the opposed lane edges are detected, the steering control is performed such that the vehicle 1 is steered to travel along approximately the middle of the lane, and the speed control is performed such that the vehicle 1 maintains a setup vehicle speed (constant speed) preliminarily set by the driver through the use of the setting vehicle speed input part 37 or by the system 100 based on given processing. In this case, each of the maximum speed and the target speed is set to the setup vehicle speed. Here, when the setup vehicle speed is greater than a speed limit (which is determined according to a speed sign or the curvature of a curve), priority is given to the speed limit, so that the vehicle speed of the vehicle 1 is limited to the speed limit. When the speed limit is determined according to the curvature of a curve, it is calculated by a given calculation formula, wherein it is set to a lower value as the curvature of the curve becomes larger (a curvature radius of the curve becomes smaller).

Further, when the setup vehicle speed of the vehicle 1 is greater than the vehicle speed of a preceding vehicle, the speed control is performed such that the vehicle 1 follows the preceding vehicle while maintaining an inter-vehicle distance appropriate to a follow-up vehicle speed. In this case, the maximum speed and the target speed are set, respectively, to the setup vehicle speed, and the vehicle speed of the preceding vehicle. That is, the target speed is set to a smaller one of the setup vehicle speed and the vehicle speed of the preceding vehicle. Then, when the preceding vehicle being followed by the vehicle 1 disappears from ahead of the vehicle 1 due to lane change or the like, the speed control is performed such that the vehicle 1 maintains the setup vehicle speed, again.

On the other hand, in a case where the opposed lane edges are not detected, and there is a preceding vehicle, the steering control is performed such that the vehicle 1 follows a traveling trajectory of the preceding vehicle, and the speed control is performed such that the vehicle 1 follows the speed on the traveling trajectory of the preceding vehicle. In this case, the maximum speed and the target speed are set, respectively, to the setup vehicle speed, and the vehicle speed of the preceding vehicle.

Further, in a case where the opposed lane edges are not detected, and there is not any preceding vehicle (it is unable to detect any demarcation line and follow any preceding vehicle), it is unable to determine a traveling position on a traveling road. In this case, the driver manually controls vehicle steering and vehicle speed by manipulating the steering wheel, and the accelerator pedal and/or brake pedal so as to maintain or change a current traveling behavior (steering angle, yaw rate, vehicle speed, acceleration/deceleration, or the like) according to the will of the driver. In this case, each of the maximum speed and the target speed is set to the setup vehicle speed.

In the preceding vehicle following mode, the obstacle avoidance control (the speed control and the steering control) described in detail later is further executed automatically, irrespective of the presence or absence of a preceding vehicle, and the detectability of the opposed lane edges.

Secondly, the automatic speed control mode is a mode in which the speed control is performed such that the vehicle 1 maintains a given setup vehicle speed (constant speed) preliminarily set by the driver or the system 100, and involves the automatic speed control (the engine control and/or the brake control), and the automatic obstacle avoidance control (the speed control) to be executed by the driving support control system 100, wherein, basically, the automatic steering control is not performed. However, in a situation where the vehicle 1 deviates from a traveling road (lane) or is likely to collide with an obstacle (neighboring vehicle or structural object), deceleration control appropriate to a distance with the obstacle and the automatic steering control are executed by the driving support control system 100.

In this automatic speed control mode, although the vehicle 1 is controlled to travel to maintain the setup vehicle speed, the driver can increase the vehicle speed beyond the setup speed by depressing the accelerator pedal (accelerator override control). Further, when the driver performs brake manipulation, the highest priority is given to the will of the driver, and therefore the vehicle 1 is decelerated from the setup vehicle speed. In the automatic speed control mode, when the vehicle 1 catches up to a preceding vehicle, the speed control is performed such that the vehicle 1 follows the preceding vehicle while maintaining an inter-vehicle distance appropriate to a follow-up vehicle speed, and then when the preceding vehicle disappears, the speed control is performed such that the follow-up vehicle speed is returned to the setup vehicle speed. In the automatic speed control mode, the maximum speed is set to the setup vehicle speed, and the target speed is set to a small one of the setup vehicle speed and the vehicle speed of the preceding vehicle.

Thirdly, the speed limiting mode is a mode in which the speed control is performed to prevent the vehicle speed of the vehicle 1 from exceeding a speed limit (legal speed limit) designated by a speed sign, and involves the automatic speed control (engine control) to be executed by the driving support control system 100. With respect to the legal speed limit, the ECU 10 may be configured to subject image data about an image of a speed sign or a speed marking on a road surface taken by the vehicle-mounted camera 21, to image recognition processing, to identify the legal speed limit, or may be configured to receive information regarding the legal speed limit from outside via a wireless communication. This legal speed limit is input from the ECU 10 into the driver manipulation unit 35, and displayed on the legal speed limit display of the approval input part 38. In the speed limiting mode, even when the driver depresses the accelerator pedal so as to increase the vehicle speed beyond the limiting speed, the vehicle speed of the vehicle 1 is increased only up to the limiting speed. In the speed limiting mode, the maximum speed is set to the legal speed limit, and the target speed is set according to the depression amount of the accelerator pedal.

Fourthly, the basic control mode is a mode (off mode) in which none of the driving support modes is selected through the driver manipulation unit 35, and the automatic steering control and speed control are not executed by the driving support control system 100. Thus, in the basic control mode, the maximum speed and the target speed are not set. However, the basic control mode is configured to execute an automatic anti-collision control. In this anti-collision control, when the vehicle 1 encounters a situation where it is likely to collide with a preceding vehicle or the like, the brake control is automatically executed to avoid the collision. It should be noted that the anti-collision control is also executed in the preceding vehicle following mode, the automatic speed control mode, and the speed limiting mode.

On the other hand, the obstacle avoidance control described in detail later is not executed in the speed limiting mode and the basic control mode.

Next, with reference to FIGS. 2 to 4, plural traveling courses to be calculated in the driving support control system 100 according to this embodiment will be described. FIGS. 2 to 4 are explanatory diagrams of first to third traveling courses, respectively. In this embodiment, the ECU 10 is configured to calculate the first to third traveling courses R1 to R3 temporally repeatedly (e.g., at intervals of 0.1 sec). In this embodiment, the ECU 10 is operable, based on information from the sensors and others, to calculate a traveling course in a period from a present time through until a given time period (e.g., 2 to 4 sec) elapses. The traveling course Rx (where x = 1, 2, 3) is defined by a target position (Px_k) and a target speed (Vx_k) (where k = 0, 1, 2, ----, n) of the vehicle 1 on the traveling course.

Each of the traveling courses (first to third traveling courses) in FIGS. 2 to 4 is calculated based on the shape of a traveling road on which the vehicle 1 is traveling, the traveling trajectory of a preceding vehicle, the traveling behavior of the vehicle 1, and the setup vehicle speed, without taking into account obstacle information regarding an obstacle (including a parked vehicle, a pedestrian and the like) on the traveling road or around the traveling road (i.e., information regarding an obstacle whose situation can vary temporally), and traveling situation change information regarding a change in traveling situation. The traveling situation change information may include traveling regulation information regarding traveling regulation according to traffic regulations (a traffic light, a traffic sign and the like) (i.e., information detectable on site during traveling, instead of the map information), and lane change request information according to the will of the driver (the will to change a course, such as manipulation of a winker (turning signal)). As above, in this embodiment, the traveling course is calculated without taking into account the obstacle information, the traveling regulation information and the like, so that it is possible to keep down the overall calculation load for calculating the plural traveling courses.

For the sake of facilitating understanding, the following description will be made based on an example where each of the traveling courses is calculated on the assumption that the vehicle 1 travels on a road 5 consisting of a straight section 5a, a curve section5b, a straight section 5c. The road 5 comprises left and right lanes 5L, 5R. Assume that, at a present time, the vehicle 1 travels on the lane 5L in the straight section 5a.

As shown in FIG. 2, the first traveling course R1 is set, by a distance corresponding to a given time period, to enable the vehicle 1 to maintain traveling within the lane 5L serving as the traveling road, in conformity to the shape of the road 5. Specifically, the first traveling course R1 is set, in each of the straight sections 5a, 5c, to enable the vehicle 1 to maintain traveling along approximately the widthwise middle of the lane 5L, and set, in the curve section 5b, to enable the vehicle 1 to travel on an inner side or in-side (on the side of a center O of a curvature radius L of the curve section 5b) with respect to the widthwise middle of the lane 5.

The ECU 10 is operable to execute the image recognition processing for image data about images around the vehicle 1 taken by the vehicle-mounted camera 21, to detect opposed lane edges 6L, 6R. The opposed lane edges are a demarcation line (white road line or the like), and a road shoulder or the like, as mentioned above. Further, the ECU 10 is operable, based on the detected opposed lane edges 6L, 6R, to calculate a lane width W of the lane 5L and the curvature radius L in the curve section 5b. Alternatively, the ECU 10 may be configured to acquire the lane width W and the curvature radius L from the map information of the navigation system 30. Further, the ECU 10 is operable to read, from the image data, a speed limit indicated by a speed sign S or on the road surface. Alternatively, the ECU 10 may be configured to acquire the speed limit from outside via a wireless communication, as mentioned above.

With regard to the straight sections 5a, 5c, the ECU 10 is operable to set a plurality of target positions P1_k of the first traveling course R1 to enable a widthwise middle (e.g., the position of the center of gravity) of the vehicle 1 to pass through the widthwise middle between the opposed lane edges 6L, 6R. In this embodiment, the ECU 10 is operable to set the first traveling course R1 to enable the vehicle 1 to travel along the middle of the lane in each of the straight sections, as mentioned above. Alternatively, the ECU 10 may be configured to set the first traveling course R1 while reflecting a driving characteristic (preference or the like) of the driver, for example, such that the first traveling course R1 extends along a line adjacent to the middle of the lane and offset in the width direction by a given shift amount (given distance) with respect to the middle of the lane.

On the other hand, with respect to the curve interval 5b, the ECU 10 is operable to maximally set a displacement amount Ws toward the in-side from the widthwise middle position of lane 5L at a longitudinal middle position P1_c of the curve interval 5b. This displacement amount Ws is calculated based on the curvature radius L, the lane width W, and a width dimension D of the vehicle 1 (prescribed value stored in the memory of the ECU 10). Then, the ECU 10 is operable to set a plurality of target positions P1_k of the first traveling course R1 in such a manner as to smoothly connect the longitudinal middle position P1_c of the curve section 5b to the widthwise middle position of each of the straight sections 5a, 5b. Here, it should be understood that the first traveling course R1 may also be offset toward the in-side in the straight sections 5a 5c at positions just before entering the curve section 5b and just after exiting the curve section 5b.

Basically, a target speed V1_k at the target position P1_k of the first traveling course R1 is set to a given setup vehicle speed (constant speed) preliminarily set by the driver through the use of the setting vehicle speed input part 37 of the driver manipulation unit 35 or by the system 100. However, when this setup vehicle speed exceeds the speed limit acquired from a speed sign or the like, or the speed limit determined according to the curvature radius L of the curve section 5b, the target speed V1_k at the target position P1_k on the traveling course is limited to a lower one of the two speed limits. Further, the ECU 10 is operable to correct the target position P1_k and the target speed V1_k, according to a current behavior state (i.e., vehicle speed, acceleration/deceleration, yaw rate, steering angle, lateral acceleration, etc.) of the vehicle 1. For example, when a current value of the vehicle speed is largely different from the setup vehicle speed, the target speed is corrected so as to enable the vehicle speed to come close to the setup vehicle speed.

Basically, the first traveling course R1 is used in the situation where the opposed lane edges are detected. Thus, in a situation where the opposed lane edges are not detected, the first traveling course R1 needs not be calculated. However, in preparation for a situation where the first traveling course R1 is erroneously selected even though the opposed lane edges are not detected, the first traveling course R1 may be calculated in the following alternative manner.

In such a situation, the ECU 10 is operable, assuming that the vehicle 1 travels along the middle of the lane 5L, set virtual opposed lane edges, using the steering angle or yaw rate according to the vehicle speed of the vehicle 1. Then, the ECU 10 is operable, based on the virtually-set opposed lane edges, to calculate the first traveling course to enable the vehicle 1 to travel along the middle of the lane, in each of the straight sections and travel on the in-side of the lane, in the curve section.

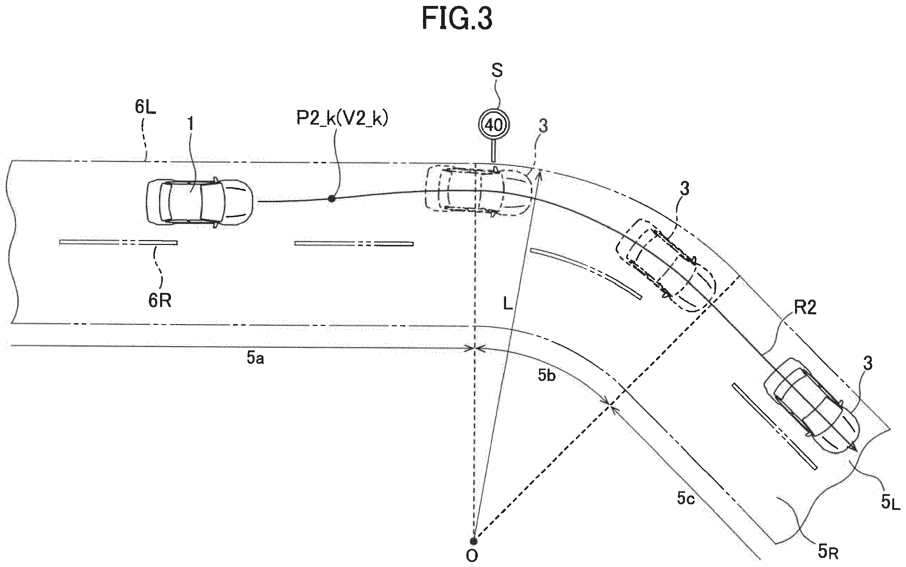

As shown in FIG. 3, the second traveling course R2 is set, by a distance corresponding to a given time period, to enable the vehicle 1 to follow a traveling trajectory of a preceding vehicle 3. The ECU 10 is operable to continuously calculate the position and speed of the preceding vehicle 3 on the lane 5L on which the vehicle 1 is traveling, based on the image data from the vehicle-mounted camera 21, the measuring data from the millimeter-wave radar 22, and the vehicle speed of the vehicle 1 from the vehicle speed sensor 23, and store the calculated position and speed as preceding vehicle trajectory information, and, based on the preceding vehicle trajectory information, to set the traveling trajectory of the preceding vehicle 3 as the second traveling course R2 (a target position P2_k and a target speed V2_k). The second traveling course R2 is basically selected in the situation where the opposed lane edges are not detected (therefore, in FIG. 3, load lines are indicated by the two-dot chain lines for the sake of facilitating understanding).

In this embodiment, the second traveling course R2 is basically calculated in the situation where a preceding vehicle is detected. Thus, in a situation where no preceding vehicle is detected, the second traveling course R2 needs not be calculated. However, in preparation for a situation where the second traveling course R2 is erroneously selected even though no preceding vehicle is detected, the second traveling course R2 may be calculated in the following alternative manner.

In such a situation, the ECU 10 is operable, assuming that a preceding vehicle is traveling at a position ahead of the vehicle 1 by a given distance according to the vehicle speed of the vehicle 1. Further, assume that this virtual preceding vehicle has the same traveling behavior (vehicle speed, steering angle, yaw rate, etc.) as that of the vehicle 1. Then, the ECU 10 is operable to calculate the second traveling course R2 to follow the virtual preceding vehicle.

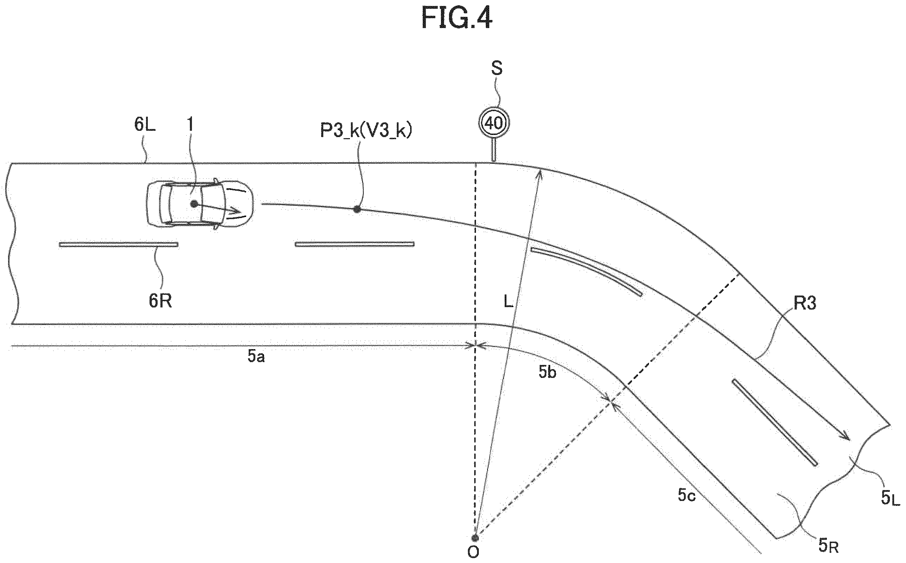

As shown in FIG. 4, the third traveling course R3 is set, by a distance corresponding to a given time period, based on a current driving state of the vehicle 1 by the driver. Specifically, the third traveling course R3 is set based on a position and a speed estimated from a current traveling behavior of the vehicle 1.

The ECU 10 is operable, based on the steering angle, the yaw rate and the lateral acceleration of the vehicle 1, to calculate a target position P3_k of the third traveling course R3 having the distance corresponding to the given time period. However, in the situation where the opposed lane edges are detected, the ECU 10 is operable to correct the target position P3_k so as to prevent the calculated third traveling course R3 from coming close to or intersecting with any of the lane edges.

Further, the ECU 10 is operable, based on current values of the vehicle speed and the acceleration/deceleration of the vehicle 1, to calculate a target speed V3_k of the third traveling course R3 having the distance corresponding to the given time period. Here, when the target speed V3_k exceeds the speed limit acquired from the speed sign S or the like, the target speed V3_k may be corrected so as not to exceed the speed limit.

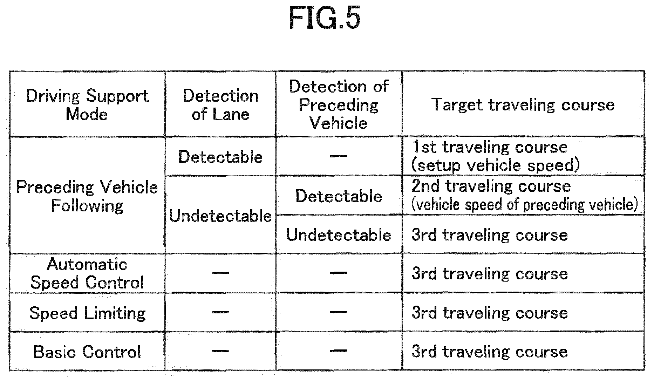

Next, with reference to FIG. 5, a relationship between the driving support mode and the target traveling course in the driving support control system 100 will be described. FIG. 5 is an explanatory diagram showing the relationship between the driving support mode and the target traveling course. In this embodiment, the driving support control system 100 is configured such that, when the driver manipulates the mode selection switch 36 to select one of the driving support modes, the ECU 10 operates to select one of the first to third traveling courses R1 to R3 according to the measurement data from sensors and others. That is, in this embodiment, even when the driver selects a certain one of the driving support modes, the same traveling course is not always applied, but one of the traveling courses appropriate to a current traveling state is applied.

When the opposed lane edges are detected in a situation where the preceding vehicle following mode is selected, the first traveling course is applied, irrespective of the presence or absence of a preceding vehicle. In this case, the setup vehicle speed set through the use of the setting vehicle speed input part 37 is used as the target speed.

On the other hand, when the opposed lane edges are not detected but a preceding vehicle is detected in the situation where the preceding vehicle following mode is selected, the second traveling course is applied. In this case, the target speed is set according to the vehicle speed of the preceding vehicle. Further, when neither the opposed lane edges nor a preceding vehicle is detected in the situation where the preceding vehicle following mode is selected, the third traveling course is applied.

In the automatic speed control mode which is a mode in which the speed control is automatically executed, as mentioned above, the setup speed set through the use of the setting vehicle speed input part 37 is used as the target speed. Further, the driver manually controls vehicle steering by manipulating the steering wheel. Thus, although the third traveling course is applied, the vehicle 1 is likely not to travel along the third traveling course, depending on the driver's manipulation (of the steering wheel and/or the brake pedal).

Further, in a situation where the speed limiting mode is selected, the third traveling course is applied. In the speed limiting mode which is a mode in which the speed control is automatically executed, as mentioned above, the target speed is set according to the depression amount of the accelerator pedal by the driver, within the speed limit (maximum speed). Further, the driver manually controls vehicle steering by manipulating the steering wheel. Thus, although the third traveling course is applied, the vehicle 1 is likely not to travel along the third traveling course, depending on the driver's manipulation (of the steering wheel the brake pedal, and/or the accelerator pedal), as with the automatic speed control mode.

Further, in a situation where the basic control mode (off mode) is selected, the third traveling course is applied. The basic control mode is basically the same as the speed limiting mode in a state in which no speed limit is set.

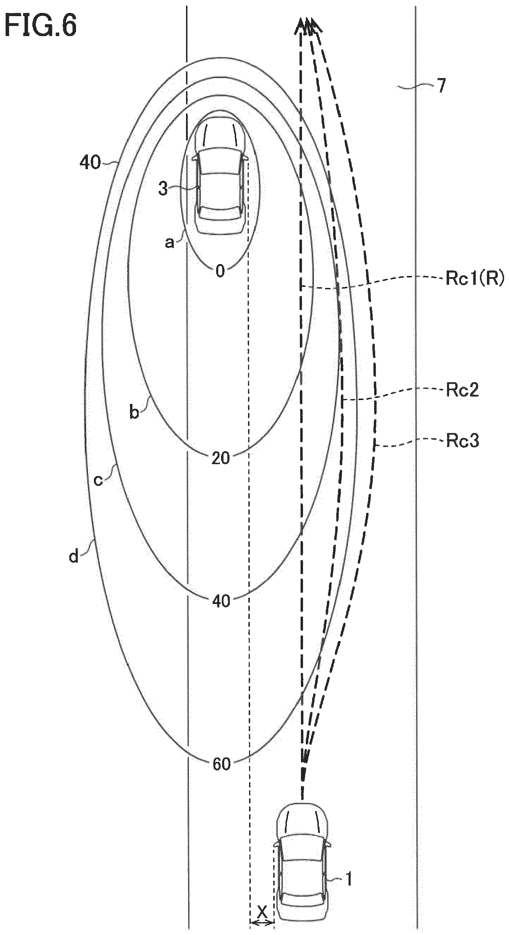

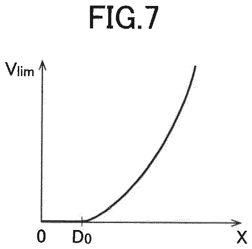

Next, with respect to FIGS. 6 and 7, the obstacle avoidance control and associated traveling course correction processing to be executed by the driving support control system 100 will be described. FIG. 6 is an explanatory diagram of the obstacle avoidance control, and FIG. 7 is an explanatory diagram showing a relationship between an allowable upper limit of a pass-by speed and a clearance between an obstacle and a vehicle in the obstacle avoidance control.

In FIG. 6, the vehicle 1 is traveling on a traveling road (lane), and is just about passing another vehicle 3 parked at the side of the traveling road 7 and overtaking the parked vehicle 3.

Generally, when passing (or overtaking) an obstacle (e.g., a preceding vehicle, a parked vehicle, or a pedestrian) on or near a road, the driver of the vehicle 1 keeps a given clearance or distance (lateral distance) between the vehicle 1 and the obstacle in a lateral direction orthogonal to a traveling direction of the vehicle 1, and reduces the vehicle speed to a value at which the driver feels safe. Specifically, in order to avoid dangers such as a situation where a preceding vehicle suddenly changes a course, a situation where a pedestrian comes out from a blind spot due to the obstacle, and a situation where a door of a parked vehicle is suddenly opened, the relative speed with respect to the obstacle is set to a lower value as the clearance becomes smaller.

Further, generally, when the vehicle 1 is approaching a preceding vehicle from behind the preceding vehicle, the driver of the vehicle 1 adjusts the vehicle speed (relative speed) according to an inter-vehicle distance (longitudinal distance) along the travelling direction. Specifically, when the inter-vehicle distance is relatively large, an approaching speed (relative speed) is maintained relatively high. However, when the inter-vehicle distance becomes relatively small, the approaching speed is set to a lower value. Subsequently, at a given inter-vehicle distance, the relative speed between the two vehicles is set to zero. This action is the same even when the preceding vehicle is a parked vehicle.

As above, the driver drives the vehicle 1 in such a manner as to avoid dangers while taking into account a relationship between the distance (including the lateral distance and the longitudinal distance) between an obstacle and the vehicle 1, and the relative speed therebetween.

Therefore, in this embodiment, as shown in FIG. 6, the vehicle 1 is configured to set a two-dimensional distribution zone (speed distribution zone 40) defining an allowable upper limit of the relative speed in the travelling direction of the vehicle 1 with respect to an obstacle (such as the parked vehicle 3) detected by the vehicle 1, around the obstacle (over lateral, rear and forward regions around the obstacle) or at least between the obstacle and the vehicle 1. In the speed distribution zone 40, the allowable upper limit Vₗᵢₘ of the relative speed is set at each point around the obstacle. In this embodiment, in all the driving support modes, the obstacle avoidance control is executed to prevent the relative speed of the vehicle 1 with respect to the obstacle from exceeding the allowable upper limit Vₗᵢₘ in the speed distribution zone 40.

As can be understood from FIG. 6, in the speed distribution zone 40, the allowable upper limit of the relative speed is set such that it becomes smaller as the lateral distance and the longitudinal distance from the obstacle become smaller (as the vehicle 1 approaches the obstacle more closely). In FIG. 6, for the sake of facilitating understanding, four constant relative speed lines each connecting the same allowable upper limits are shown. In this embodiment, the constant relative speed lines a, b, c, d correspond, respectively, to four lines on which the allowable upper limit Vₗᵢₘ is 0 km/h, 20 km/h, 40 km/h and 60 km/h.

Here, the speed distribution zone 40 does not necessarily have to be set over the entire circumference of the obstacle, but may be set at least one (in FIG. 6, right side) of opposite lateral sides of the obstacle on which the vehicle 1 exists. Further, although FIG. 6 shows the speed distribution zone 40 such that it also covers a region in which the vehicle 1 does not travel (outside the traveling road 7), the speed distribution zone 40 may be set only on the traveling road 7. Further, although FIG. 6 shows the speed distribution zone 40 defining an allowable upper limit of up to 60 km/h, the speed distribution zone 40 may be set to define a larger relative speed, in consideration of passing with respect to an oncoming vehicle which is traveling on an opposite lane.

As shown in FIG. 7, when the vehicle 1 is traveling at a certain absolute speed, the allowable upper limit Vₗᵢₘ set in the lateral direction of the obstacle is kept at zero when the clearance X is less than D₀ (safe distance), and then quadratically increases when the clearance X becomes equal to or greater than D₀ (Vₗᵢₘ = k (X - D₀)², where X ≥ D₀). That is, when the clearance X is less than D₀, the relative speed of the vehicle 1 becomes zero so as to ensure safety. On the other hand, when the clearance X is equal to or greater than D₀, the vehicle 1 is allowed to pass the obstacle at a larger relative speed as the clearance becomes larger.

In the example shown in FIG. 7, the allowable upper limit Vₗᵢₘ in the lateral direction of the obstacle is defined as follows: Vₗᵢₘ = f(X) = k (X - D₀)². In this formula, k denotes a gain coefficient related to the degree of change of Vₗᵢₘ with respect to X, and is set depending on a type of obstacle or the like. Similarly, D₀ is set depending on a type of obstacle or the like.

In this embodiment, Vₗᵢₘ includes a safe distance, and is defined as a quadratic function of X, as mentioned above. Alternatively, Vₗᵢₘ needs not include a safe distance, and may be defined as another function (e.g., a linear function). Further, the allowable upper limit Vₗᵢₘ has been described about a region thereof in the lateral direction of the obstacle with reference to FIG. 7, it can be set in the remaining region in all radial directions of the obstacle including the longitudinal direction, in the same manner. In such a case, the coefficient k and the safe distance D₀ may be set depending on a direction from the obstacle.

The speed distribution zone 40 can be set based on various parameters. Examples of the parameter may include the relative speed between the vehicle 1 and an obstacle, the type of obstacle, the traveling direction of the vehicle 1, a moving direction and a moving speed of the obstacle, the length of the obstacle, and the absolute speed of the vehicle 1. That is, based on these parameters, the coefficient k and the safe distance D₀ can be selected.

In this embodiment, the obstacle includes a vehicle, a pedestrian, a bicycle, a cliff, a trench, a hole and a fallen object. The vehicle can be classified into a passenger vehicle, a truck, and a motorcycle. The pedestrian can be classified into an adult, a child and a group.

Further, FIG. 6 shows one speed distribution zone in a situation where one obstacle exists. Differently, in a situation where plural obstacles exist in adjacent relation, plural speed distribution zones will overlap each other. Thus, in such an overlapping part, the constant relative speed line may be set by preferentially selecting one of two lines having a smaller allowable upper limit while excluding the other, or by smoothly connecting two approximately elliptical shapes, instead of the approximately elliptical-shaped constant relative speed line as shown in FIG. 6.

As shown in FIG. 6, when the vehicle 1 is traveling on the traveling road 7, the ECU 10 of the vehicle 1 operates to detect an obstacle (parked vehicle 3) based on the image data from the vehicle-mounted camera 21. At this moment, the type of obstacle (in this example, a vehicle or a pedestrian) is identified.

Further, the ECU 10 operates to calculate the position and the relative speed of the obstacle (parked vehicle 3) with respect to the vehicle 1 and absolute speed of the obstacle, based on the measurement data from the millimeter-wave radar 22 and vehicle speed data from the vehicle speed sensor 23. Here, the position of the obstacle includes a y-directional position (longitudinal distance) along the traveling direction of the vehicle 1, and an x-directional position (lateral distance) along the lateral direction orthogonal to the traveling direction. As the relative speed, a relative speed contained in the measurement data may be directly used, or a component of velocity along the traveling direction may be calculated from the measurement data. Further, although a component of velocity orthogonal to the travelling direction does not necessarily have to be calculated, it may be estimated from plural pieces of measurement data and/or plural pieces of image data, as needed basis.

The ECU 10 operates to set the speed distribution zone 40 with respect to each of one or more detected obstacles (in FIG. 6, the parked vehicle 3). Then, the ECU 10 operates to perform the obstacle avoidance control to prevent the vehicle speed of the vehicle 1 from exceeding the allowable upper limit Vₗᵢₘ in the speed distribution zone 40. For this purpose, along with the obstacle avoidance control, the ECU 10 operates to correct the target traveling course applied according to the driving support mode selected by the driver.

Specifically, in a situation where, if the vehicle 1 travels along the target traveling course, the target speed exceeds the allowable upper limit defined in the speed distribution zone 40, at a certain target position, the target speed is reduced without changing the target position (target traveling course Rc1 in FIG. 6), or the target position is changed to a bypass course so as to allow the target speed to avoid exceeding the allowable upper limit (target traveling course Rc3 in FIG. 6) or both the target position and the target speed are changed (target traveling course Rc2 in FIG. 6).

For example, FIG. 6 shows a case where the calculated target traveling course R is a course which is set such that the vehicle 1 travels along a widthwise middle position of the traveling road 7 (target position) at 60 km/h (target speed). In this case, the parked vehicle 3 as the obstacle exists ahead of the vehicle 1. However, in a step of calculating the target traveling course R, this obstacle is not taken into account to reduce a calculation load, as mentioned above.

When the vehicle 1 travels along the target traveling course R, it will cut across the constant relative speed lines d, c, b, b, c, d of the speed distribution zone 40, in this order. That is, the vehicle 1 being traveling at 60 km/h enters a region inside the constant relative speed line d (allowable upper limit Vₗᵢₘ = 60 km/h). Thus, the ECU 10 operates to correct the target traveling course R so as to restrict the target speed at each target position of the target traveling course R to the allowable upper limit Vₗᵢₘ or less, thereby forming the target traveling course Rc1. That is, in the corrected target traveling course Rc1, as the vehicle 1 approaches the parked vehicle 3, the target speed is reduced to become equal to or less than the allowable upper limit Vₗᵢₘ at each target position, i.e., gradually reduced to less than 20 km/h, and then, as the vehicle 1 travels away from the parked vehicle 3, the target speed is gradually increased to 60 km/h as the original speed.

The target traveling course Rc3 is a course which is set such that the vehicle 1 travels outside the constant relative speed line d (which corresponds to a relative speed of 60 km/h), instead of changing the target speed (60 km/h) of the target traveling course R. The ECU 10 operates to correct the target traveling course R such that the target position is changed to a point on or outside the constant relative speed line d, while maintain the target speed of the target traveling course R, thereby forming the target traveling course Rc3. Thus, the target speed of the target traveling course Rc3 is maintained at 60 km/h as the target speed of the target traveling course R.

The target traveling course Rc2 is a course set by changing both the target position and the target speed of the target traveling course R. In the target traveling course Rc2, instead of maintaining the target speed at 60 km/h, the target speed is gradually reduced to 40 km/h as the vehicle 1 approaches the parked vehicle 3, and then gradually increased to 60 km/h as the original speed, as the vehicle 1 travels away from the parked vehicle 3. The target traveling course Rc2 can be formed such that the target position and the target speed thereof satisfy a given condition. For example, the given condition is that each of the longitudinal acceleration/deceleration and the lateral acceleration of the vehicle 1 is equal to or less than a given value, or that there is no departure from the traveling road 7 toward a neighboring lane.

The correction to be achieved by changing only the target speed without changing the target position of the target traveling course R, as in the target traveling course Rc1, can be applied to a driving support mode which involves the speed control but does not involve the steering control (e.g., the automatic speed control mode).

Further, the correction to be achieved by changing only the target position without changing the target speed of the target traveling course R, as in the target traveling course Rc3, can be applied to a driving support mode which involves the steering control (e.g., the preceding vehicle following mode).

Further, the correction to be achieved by changing both the target position and the target speed of the target traveling course R, as in the target traveling course Rc2, can be applied to a driving support mode which involves the speed control and the steering control (e.g., the preceding vehicle following mode).

Alternatively, ECU 10 may be configured to correct the target traveling course R to any one of the target traveling courses Rc1 to Rc3, according to a driver's preference regarding the avoidance control (e.g., higher-priority item, such as vehicle speed or straight-ahead traveling, selected by the driver), irrespective of whether which of the driving support modes is selected.

The obstacle avoidance control is also applied in a situation where, in the preceding vehicle following mode and the automatic speed control mode, the vehicle 1 catches up with a preceding vehicle which is traveling in the same lane. Specifically, as the vehicle 1 approaches the preceding vehicle, the vehicle speed of the vehicle 1 is restricted such that the relative speed is reduced in conformity to the allowable upper limit Vₗᵢₘ of the speed distribution zone 40. Then, at a position of the constant relative speed line a on which the relative speed between the vehicle 1 and the preceding vehicle becomes zero, the vehicle 1 follows the preceding vehicle while maintaining a given inter-vehicle distance.

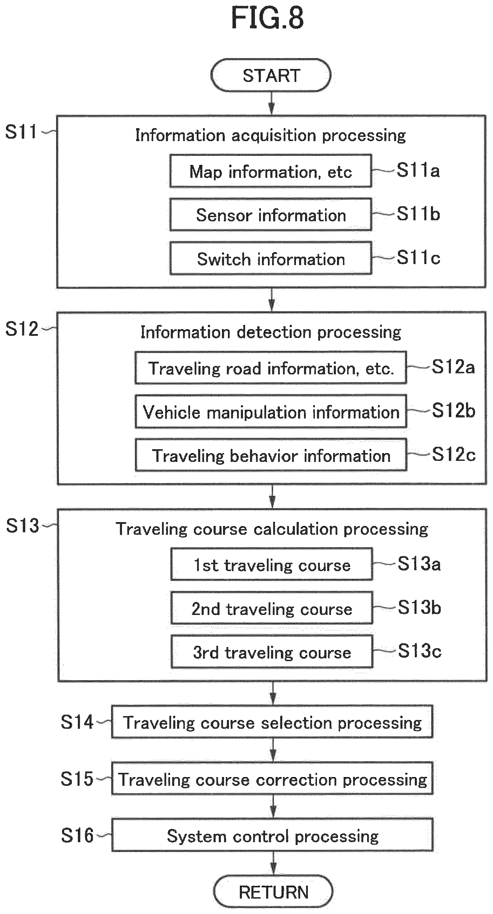

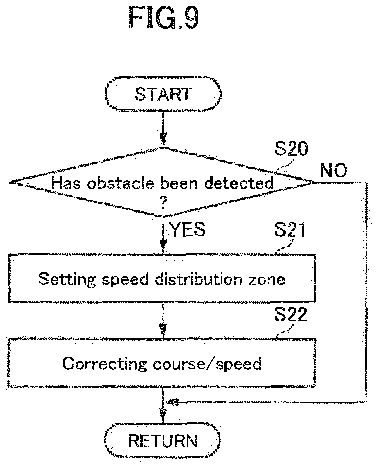

Next, with reference to FIGS. 8 and 9, a processing flow of driving support control in the driving support control system 100 according to this embodiment will be described. FIG. 8 is the processing flow of the driving support control, and FIG. 9 is a processing flow of traveling course correction processing.

The ECU 10 operates to repeatedly execute the processing flow in FIG. 6 at intervals of a given time period (e.g., 0.1 seconds). First of all, the ECU 10 operates to execute information acquisition processing (S11). In the information acquisition processing, the ECU 10 operates to: acquire the current vehicle position information and the map information, from the position measurement system 29 and the navigation system 30 (S11a); acquire sensor information from the vehicle-mounted camera 21, the millimeter-wave radar 22, the vehicle speed sensor 23, the acceleration sensor 24, the yaw rate sensor 25, the driver manipulation unit 35 and others (S11b); and acquire switch information from the steering angle sensor 26, the accelerator sensor 27, the brake sensor 28, the turning signal sensor and others (S11c).

Subsequently, the ECU 10 operates to execute given information detection processing (S12), using a variety of information acquired in the information acquisition processing (S11). In the information detection processing, the ECU 10 operates to detect, from the current vehicle position information, the map information and the sensor information, the traveling road information regarding a shape of a traveling road around and ahead of the vehicle 1 (the presence or absence of a straight section and a curve section, the length of each of the sections, the curvature radius of the curve section, a lane width, the positions of opposed lane edges, the number of lanes, the presence or absence of an intersection, a speed limit determined by the curvature of a curve, etc.), the traveling regulation information (legal speed limit, red light, etc.), the obstacle information (the presence or absence , the position, the speed, etc., of a preceding vehicle or an obstacle), the preceding vehicle trajectory information (the position and the vehicle speed of a preceding vehicle) (S12a).

Further, the ECU 10 operates to: detect, from the switch information, vehicle manipulation information (the steering angle, the accelerator depression amount, the brake pedal depression amount, etc.) (S12b); and detect, from the switch information and the sensor information, traveling behavior information regarding the behavior of the vehicle 1 (the vehicle speed, the acceleration/deceleration, the lateral acceleration, the yaw rate, etc.) (S12c).

Subsequently, the ECU 10 operates to execute traveling course calculation processing, based on information obtained by calculation (S13). In the traveling course calculation processing, a first traveling course calculation processing (S13a), a second traveling course calculation processing (S13b) and a third traveling course calculation processing (S13c) are executed in the aforementioned manner.

Specifically, in the first traveling course calculation processing, the ECU 10 operates to calculate, based on the setup vehicle speed, the opposed lane edges, the lane width, the speed limit, the (actual) vehicle speed, the acceleration/deceleration, the yaw rate, the steering angle, the lateral acceleration, etc., the traveling course R1 (target position P1_k and target speed V1_k) by a distance corresponding to a given time period (e.g., 2 to 4 sec), so as to enable the vehicle 1 to travel along approximately the middle of a lane in a straight section, and travel on the in-side of a curve in a curve section to have a larger turning radius, wherein a lowest one of the setup vehicle speed, a speed limit designated by a traffic sign, and a speed limit determined by the curvature of the curve is set as the maximum speed.

In the second traveling course calculation processing, the ECU 10 operates to calculate, based on the preceding vehicle trajectory information (position and speed) of the preceding vehicle acquired from the sensor information, etc., the traveling course R2 by a distance corresponding to a given time period, so as to enable to the vehicle 1 to follow the behavior (position and speed) of the preceding vehicle, while maintaining a given inter-vehicle distance between the preceding vehicle and the vehicle 1, i.e., behind the preceding vehicle by a time necessary to travel over the inter-vehicle distance.

In the third traveling course calculation processing, the ECU 10 operates to calculate the traveling course R3 estimated from a current behavior of the vehicle 1 based on the vehicle manipulation information, the traveling behavior information, etc., by a distance corresponding to a given time period.

Subsequently, the ECU 10 operates to execute the traveling course selection processing for selecting one target traveling course from the calculated three traveling courses (S14). In this processing, the ECU 10 operates to select the one target traveling course, based on the driving support mode selected by the driver through the use of the mode selection switch 36, detachability of the opposed lane edges, and the presence or absence of a preceding vehicle (see FIG. 5), as described above.

Further, the ECU 10 operates to execute the traveling course correction processing for correcting the selected target traveling course (S15). Specifically, the ECU 10 operates to correct the selected target traveling course, based on the obstacle information (e.g., information about the parked vehicle 3 shown in FIG. 6). In this traveling course correction processing, basically, the traveling course is corrected to enable the vehicle 1 to avoid an obstacle or follow a preceding vehicle by the speed control and/or steering control in accordance with a selected one of the driving support modes.

As shown in FIG. 9, in the traveling course correction processing, first of all, the ECU 10 operates to determine, based on the obstacle information acquired in the step S12 of FIG. 8, whether or not there is an obstacle ahead of the vehicle 1 (S20). When no obstacle has been detected (S20: NO), the ECU 10 operates to terminate one processing cycle. On the other hand, when an obstacle has been detected (S20: YES), the ECU 10 operates to set the speed distribution zone with respect to the detected obstacle (S21). Subsequently, the ECU 10 operates to correct, based on the set speed distribution zone, one of the target traveling courses selected in accordance with one of the driving support modes which is being executed (S22), and then to terminate one processing cycle.

Returning to FIG. 8, the ECU 10 subsequently operates to output, according to the selected driving support mode, a request signal to a concerned control sub-system (the engine control system 31, the brake control system 32 and/or the steering control system 33) so as to enable the vehicle 1 to travel on the finally calculated traveling course (S16).

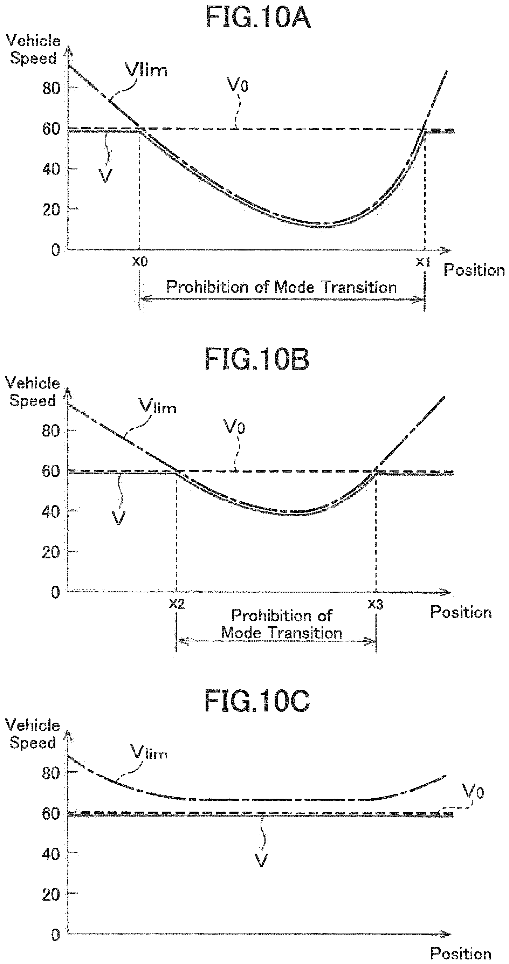

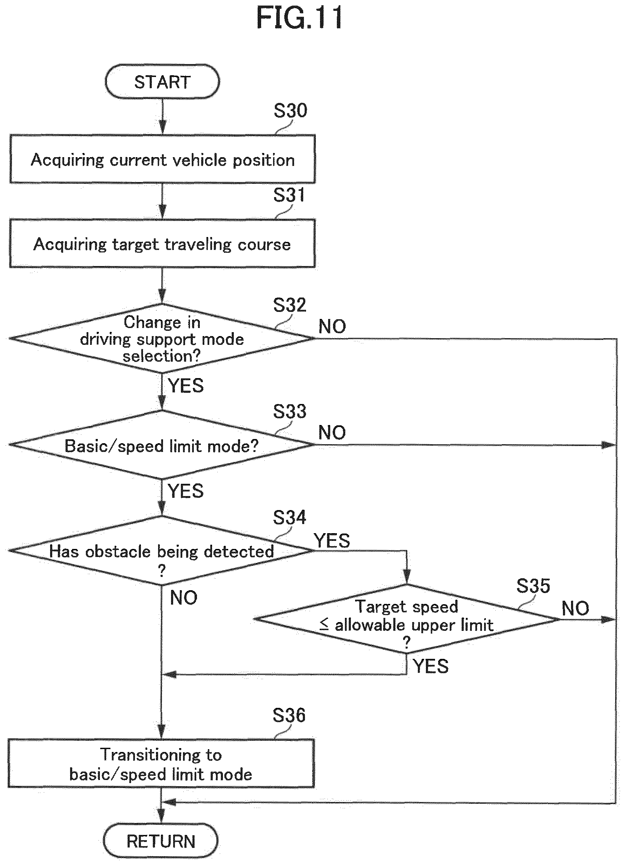

Next, with reference to FIGS. 10A to 10C and FIG. 11, driving support mode transition restriction processing in the driving support system 100 according to this embodiment will be described. FIGS. 10A to 10C are explanatory diagrams of the mode transition restriction processing, and FIG. 11 is a processing flow of the mode transition restriction processing.

In this embodiment, when the driver intends to switch between the driving support modes by manipulation of the mode selection switch 36, mode transition can be prohibited during execution of the obstacle avoidance control, by the mode transition restriction processing. The mode transition restriction processing in the situation as shown in FIG, 6 will be described below.

Each of FIGS. 10A to 10C shows the allowable upper limit Vₗᵢₘ on the selected target traveling course (Rc1, Rc2 or Rc3) after the traveling course correction processing (in a section near an obstacle), a target speed V (which is equivalent to an actual vehicle speed of the vehicle 1) on the selected target traveling course after the correction processing, and a target speed V₀ on the selected target traveling course (R) before the correction processing in the corresponding section. The following description will be described on the assumption that the vehicle 1 is traveling in accordance with a first-type driving support mode capable of executing (involving) the obstacle avoidance control (the preceding vehicle following mode or the automatic speed control mode) among the four driving support modes.

As shown in FIG. 10A, the target traveling course R (see FIG. 6) in which the target speed V₀ was set to 60 km/h when it was selected by the traveling course selection processing (step S14 of FIG. 8) is corrected to the target traveling course Rc1 by the traveling course correction processing (step S15 of FIG. 8) so as to prevent the target speed V from exceeding the allowable upper limit Vₗᵢₘ defined in the speed distribution zone 40. Thus, the vehicle 1 travels on the target traveling course Rc1 at the target speed V.

In a section between a position x0 and a position x1 on the post-correction target traveling course Rc1, the target speed V is restricted by the speed distribution zone 40 so as not to exceed the allowable upper limit Vₗᵢₘ, so that it is reduced to be lower than the target speed V₀ on the pre-correction target traveling course R. That is, in the section between the position x0 and the position x1, the vehicle 1 is subjected to speed restriction by the obstacle avoidance control so as to avoid dangers such as a contact or collision with an obstacle (parked vehicle 3).

As shown in FIG. 10B, in a case where the target traveling course R is corrected to the target traveling course Rc2, the target speed V in a section between a position x2 and a position x3 on the post-correction target traveling course Rc2 is reduced to be lower than the target speed V₀ on the pre-correction target traveling course R due to the restriction by the speed distribution zone 40. That is, in the section between the position x2 and the position x3, the vehicle 1 is subjected to speed restriction by the obstacle avoidance control so as to avoid dangers such as a contact or collision with the obstacle (parked vehicle 3).

For this purpose, in this embodiment, a mode transition from the first-type driving support mode which involves the obstacle avoidance control to at least a second-type driving support mode which does not involve the obstacle avoidance control (the speed limiting mode or the basic control mode) among the remaining driving support modes is prohibited. If, in the section between the positions x0 and the position x1 or between the positions x2 and the position x3, the first-type driving support mode which involves the obstacle avoidance control is transitioned to the second-type driving support mode which does not involve the obstacle avoidance control, differently from this embodiment, the driver will have to perform an obstruct avoidance manipulation himself/herself, leading to dangers such as a contact or collision with the obstacle. Therefore, in this embodiment, in such a situation, the mode transition is prohibited.

As shown in FIG. 10C, in a case where the target traveling course R is corrected to the target traveling course Rc3, the target speed V on the post-correction target traveling course Rc3 is maintained at the target speed V₀ on the pre-correction target traveling course R, without being subjected to the restriction by the speed distribution zone 40. That is, although the vehicle 1 traveling on the post-correction target traveling course Rc3 is deviated laterally from the target position on the pre-correction target traveling course R, it can travel at a target speed V equal to the target speed V₀ on the pre-correction target traveling course R. Thus, in this case, even if the first-type driving support mode which involves the obstacle avoidance control is transitioned to the second-type driving support mode which does not involve the obstacle avoidance control, there is no danger such as a contact or collision with the obstacle. Therefore, the mode transition is permitted.

In this embodiment, during a period during which the vehicle 1 travels at least in the section between the positions x0 and the position x1 (see FIG. 10A) or between the positions x2 and the position x3 (see FIG. 10B), the mode transition is prohibited. Alternatively, the ECU 10 may be configured to prohibit the mode transition, after the selected target traveling course is subjected, in the step S15, to the correction for limiting the target speed to the allowable upper limit or less, even before the vehicle 1 travels in the section between the positions x0 and the position x1 or between the positions x2 and the position x3.

In this embodiment, the ECU 10 is configured to prohibit the mode transition from the first-type driving support mode which involves the obstacle avoidance control to the second-type driving support mode which does not involve the obstacle avoidance control. Alternatively, the ECU 10 may be configured to further prohibit a mode transition from the first-type driving support mode which involves the obstacle avoidance control to another first-type driving support mode which involves the obstacle avoidance control among the remaining driving support modes. In this mode transition, if the obstacle avoidance control is not adequately taken over before and after the mode transition, a contact or collision with the obstacle is also likely to occur. Thus, by prohibiting such a mode transition, it becomes possible to further reduce dangers such as a contact or collision with the obstacle.

Next, with reference to FIG. 11, a processing flow of the driving support mode transition restriction processing will be described. The ECU 10 operates to execute the processing routine in FIG. 11 temporally repeatedly.

First of all, the ECU 10 operates to acquire a current position of the vehicle 1 in the same manner as that in the step S11 of FIG. 8 (S30), and further acquire the traveling course (post-correction target traveling course) calculated in the step S15 of FIG. 8 (S31).

Subsequently, the ECU 10 operates to determine whether or not there is a change in the driving support mode selection signal received from the mode selection switch 36 (S32). When there is no change in the previously-received driving support mode selection signal (S32: NO), i.e., the same driving support mode is continuously selected, the ECU 10 operates to terminate one processing cycle.

On the other hand, when there is a change in the driving support mode selection signal (S32: YES), the ECU 10 operates to determine, based on the changed driving support mode selection signal, whether or not the driver intends to switch from the first-type driving support mode which involves the obstacle avoidance control to the second-type driving support mode which does not involve the obstacle avoidance control (the basic control mode or the speed limiting mode) (S33). When the intended switching destination is not the second-type driving support mode (S33: NO), the ECU 10 operates to terminate one processing cycle.

On the other hand, the intended switching destination is the second-type driving support mode which does not involve the obstacle avoidance control (S33: YES), the ECU 10 operates to determine, based on the obstacle information, whether or not an obstacle has been detected (S34).

When no obstacle has been detected (S34: NO), i.e., there is no danger such as a contact or collision with an obstacle, the ECU 10 operates to transition the current driving support mode to the driving support mode selected by the driver (S36), and then terminate one processing cycle.

On the other hand, when an obstacle has been detected (S34: TES), the ECU 10 operates to determine whether or not a current target speed has been subjected to correction such that it is to be reduced due to restriction by a speed distribution zone (allowable upper limit) set with respect to the detected obstacle (S35). For example, the ECU 10 may be configured to perform this determination by comparing a target speed on the pre-correction target traveling course with a target speed on the post-correction target traveling course.

When the current target speed has not been subjected to the correction, i.e., is free from restriction by the allowable upper limit (S 35: YES; target speed ≤ allowable upper limit), the ECU 10 operates to transition the current driving support mode to the driving support mode selected by the driver (S36), and then terminate one processing cycle. On the other hand, when the current target speed has been subjected to the correction such that it is to be reduced due to restriction by the allowable upper limit (S 35: YES; target speed > allowable upper limit), the ECU 10 operates to terminate one processing cycle.

Next, the functions of the driving support control system according to above embodiment will be described.

In the above embodiment, the driving support control device (ECU) 10 is capable of controlling a vehicle 1 in accordance with one driving support mode selected from at least one driving support mode by a driver. The ECU 10 is configured to, in a preceding vehicle following mode or an automatic speed control mode as a given driving support mode, execute control of causing the vehicle 1 to travel at a set target speed. The ECU 10 is further configured to, in the preceding vehicle following mode or the automatic speed control mode, detect an obstacle (e.g., the parked vehicle 3 in FIG. 6) on or around a traveling road on and along which the vehicle 1 is traveling, and set a speed distribution zone 40 defining a distribution zone of an allowable upper limit Vₗᵢₘ of a relative speed of the vehicle 1 with respect to the obstacle, in a direction at least from the obstacle toward the vehicle 1, and to, when the vehicle 1 is within the speed distribution zone 40, execute avoidance control of preventing the relative speed of the vehicle 1 with respect to the obstacle from exceeding the allowable upper limit Vₗᵢₘ.

Further, the ECU 10 is operable, when the target speed V₀ is being restricted to a corrected target speed V by the avoidance control so as to prevent the relative speed of the vehicle 1 with respect to the obstacle from exceeding the allowable upper limit Vₗᵢₘ, during the execution of the preceding vehicle following mode or the automatic speed control mode (see FIGS. 10A and 10B), to prohibit a driving support mode transition.

Thus, in the driving support control device according to the above embodiment, in a situation where the vehicle 1 is traveling at the target speed maintained in accordance with the preceding vehicle following mode or the automatic speed control mode, wherein the target speed is being restricted so as to avoid the obstacle, the driving support mode transition is prohibited. If the driving support mode transition is permitted when the target speed is being restricted so as to avoid the obstacle, a contact or collision with the obstacle is likely to occur after the mode transition. Therefore, by prohibiting the driving support mode transition in the above situation, it becomes possible to prevent the occurrence of a contact or collision with the obstacle.

On the other hand, in the above embodiment, as long as the target speed is not restricted (see FIG. 10C) even in the situation where the obstacle is detected, the driving support mode transition is permitted. This makes it possible to ensure the probability of accepting a request for driving support mode switching from the driver, as high as possible.

In the above embodiment, the speed limiting mode is configured as the second-type driving support mode which does not involve the obstacle avoidance control. Alternatively, the speed limiting mode may be configured as the first-type driving support mode which involves the obstacle avoidance control.

### LIST OF REFERENCE SIGNS

- 1:: vehicle
- 10:: driving support control device
- 35:: driver manipulation unit
- 36:: mode selection switch
- 37:: setting vehicle speed input part
- 38:: approval input part
- 100:: driving support control system

## Claims

1. A driving support control device capable of controlling a vehicle in accordance with one driving support mode selected from at least one driving support mode by a driver, the driving support control device being configured to, in a given driving support mode, execute control of causing the vehicle to travel at a set target speed, and further configured to, in the given driving support mode, detect an obstacle on or around a traveling road on and along which the vehicle is traveling, and set a speed distribution zone defining a distribution zone of an allowable upper limit of a relative speed of the vehicle with respect to the obstacle, in a direction at least from the obstacle toward the vehicle, and to, when the vehicle is within the speed distribution zone, execute avoidance control of preventing the relative speed of the vehicle with respect to the obstacle from exceeding the allowable upper limit,
wherein the driving support control device is operable, when the target speed is being restricted by the avoidance control so as to prevent the relative speed of the vehicle with respect to the obstacle from exceeding the allowable upper limit, during the execution of the given driving support mode, to prohibit a driving support mode transition.

2. The driving support control device as recited in claim 1, wherein the driving support control device is configured to calculate a target traveling course used in the given driving support mode, and control the vehicle to travel on and along the target traveling course, in the given driving support mode.

3. The driving support control device as recited in claim 2, wherein the driving support control device is operable to:
temporally repeatedly calculate
a first traveling course which is set to maintain traveling within the traveling road,
a second traveling course which is set to follow a trajectory of a preceding vehicle, and
a third traveling course which is set based on a current traveling behavior of the vehicle on the traveling road; and
select the target traveling course from the calculated traveling courses, based on the given driving support mode selected by the driver.

4. The driving support control device as recited in claim 2 or 3, wherein the driving support control device is operable to execute the avoidance control so as to prevent the relative speed of the vehicle on the target traveling course with respect to the obstacle from exceeding the allowable upper limit.

5. The driving support control device as recited in any one of claims 1 to 4, wherein the at least one driving support mode includes:
an automatic speed control mode in which control of causing the vehicle to travel at a given setup vehicle speed is executed;
a preceding vehicle following mode in which control of causing the vehicle to follow a preceding vehicle is executed; and
a speed limiting mode in which a vehicle speed of the vehicle is restricted from exceeding a legal speed limit designated by a speed sign on a road.
